(19) Europäisches Patentamt / European Patent Office / Office européen des brevets

(11) **EP 4 394 056 A1**

(12) **EUROPEAN PATENT APPLICATION**
published in accordance with Art. 153(4) EPC

(43) Date of publication:
**03.07.2024 Bulletin 2024/27**

(21) Application number: **22886795.8**

(22) Date of filing: **18.10.2022**

(51) International Patent Classification (IPC):
**C21D 8/12** (2006.01)  **C21D 9/46** (2006.01)
**C21D 9/56** (2006.01)  **C21D 11/00** (2006.01)
**C22C 38/00** (2006.01)

(52) Cooperative Patent Classification (CPC):
**C21D 8/12; C21D 9/46; C21D 9/56; C21D 11/00;
C22C 38/00;** Y02P 10/20

(86) International application number:
**PCT/JP2022/038751**

(87) International publication number:
**WO 2023/074467 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021  JP 2021175709**

(71) Applicant: **JFE Steel Corporation
Tokyo 100-0011 (JP)**

(72) Inventors:
• **KOBAYASHI, Hirokazu
Tokyo 100-0011 (JP)**
• **MATSUBARA, Yukihiro
Tokyo 100-0011 (JP)**

(74) Representative: **Hoffmann Eitle
Patent- und Rechtsanwälte PartmbB
Arabellastraße 30
81925 München (DE)**

(54) **HOT-ROLLED STEEL STRIP ANNEALING METHOD**

(57)    Provided is a method for annealing a hot-rolled steel strip that can, during hot-band annealing for the hot-rolled steel strip, control the steel strip temperature on the exit side of a heating zone and thus the steel strip temperature on the exit side of a soaking furnace with high accuracy. Specifically, in a method for annealing a hot-rolled steel strip containing 1.6 to 5.0 mass% Si for an electrical steel sheet using annealing equipment including a heating zone, a soaking zone, and a cooling zone arranged in this order from the upstream side, a thickness meter and a rapid heating device are arranged on the upstream side of the soaking zone, and the heating temperature of the rapid heating device for the steel strip is determined based on the value of LSD defined by the thickness of the steel strip measured with the thickness meter and the threading speed of the steel strip during annealing as represented by the following Expression (1): $LSD = t \times LS$ ...(1), where $t$ is the thickness (mm) of the steel strip, and $LS$ is the threading speed (m/min) of the steel strip.

FIG. 1

EP 4 394 056 A1

**Description**

Technical Field

The present invention relates to a method for annealing a steel strip subjected to hot rolling (hot-rolled steel strip) used to produce an electrical steel sheet.

Background Art

It is known that the magnetic properties of a product sheet can be improved, that is, the Goss orientation can be highly developed, by subjecting a hot-rolled steel strip containing 1.6 to 5.0 mass% Si for an electrical steel sheet to annealing (hot-band annealing) before subjecting it to cold rolling. Such hot-band annealing is typically performed using continuous annealing equipment including a heating zone, a soaking zone, and a cooling zone.

It is also known that the annealing temperature during the hot-band annealing greatly affects the magnetic properties of a product sheet and that it is necessary to control the temperature of the hot-rolled steel strip so that it is constant and uniform over the entire length and width of the steel strip. Therefore, in continuous annealing equipment, the furnace temperature in the soaking zone is usually controlled to be constant so that the heating temperature for the hot-rolled steel strip to be annealed can be controlled in a preferable range.

However, with the above-described conventional annealing method in which only the furnace temperature in the soaking zone is controlled, it is difficult to suppress the variation in the heating temperature for the steel strip due to the variation in the thickness of the steel strip in the longitudinal direction or the variation in the threading speed of the steel strip, and thus to control the heating temperature within a preferable range. This is because a hot-rolled steel strip before cold rolling is thick and thus has a high heat capacity per unit length (i.e., the amount of heat required to increase the temperature of an object by 1°C), which requires a larger amount of heat for heating than a cold-rolled steel strip. Further, a hot-rolled steel strip is thick and thus has a large variation in thickness with respect to the rolled sheet thickness, particularly in thickness at the front end of the steel strip, and the heat capacity largely varies within the same steel strip. Therefore, compared with a cold-rolled steel strip, the hot-rolled steel strip greatly affects the temperature of an annealing furnace, and thus it is difficult to maintain the furnace temperature in each of the heating zone and the soaking zone at a predetermined temperature and thus to heat the hot-rolled steel strip to a predetermined soaking temperature.

However, there has been little disclosure of technology for controlling the heating temperature of hot-band annealing with high accuracy. For example, Patent Literature 1 discloses a technology for reducing the aging index of a steel sheet before it is subjected to the final cold rolling in the production of a grain-oriented electrical steel sheet by controlling the cooling rate of hot-band annealing.

Patent Literature 2 discloses a technology for performing hot-band annealing on a Si-containing steel sheet involving rapidly heating a steel strip during hot-band annealing.

Citation List

Patent Literature

    Patent Literature 1: Japanese Patent Laid-Open No. 2016-000856
    Patent Literature 2 : Japanese Patent Laid-Open No. 2018-066040

Summary of Invention

Technical Problem

Although Patent Literature 1 discloses a technology for improving the texture of a hot-rolled sheet for a grain-oriented electrical steel sheet by performing hot-band annealing on the sheet, it fails to mention the necessity of controlling the heating temperature of the hot-band annealing with high accuracy, or means therefor.

In addition, Patent Literature 2 employs rapid heating during hot-band annealing as a means to improve the descaling property after annealing, but does not mention precise control of the heating temperature after rapid heating.

As described above, in the production of an electrical steel sheet, precise control of the heating temperature in hot-band annealing is crucial for improving magnetic properties. However, due to the inherent characteristics of a hot-rolled steel strip, such as large plate thickness, low thickness accuracy, and large thickness variation, the temperature in the annealing furnace varies correspondingly. Therefore, there have been limitations in controlling the heating temperature of the steel strip with high precision.

An object of the present invention is to solve the above problems of the conventional technologies and to provide a method for annealing a hot-rolled steel strip that can control the steel strip temperature on the exit side of a heating zone as well as the steel strip temperature on the exit side of a soaking furnace with high accuracy during hot-band annealing.

Herein, the steel strip temperature on the exit side of the heating zone refers to the steel strip temperature at the exit of the heating zone.

Solution to Problem

The inventors have made concentrated studies to solve the above problems and have developed the present invention by finding that, to control the heating temperature of hot-band annealing with high accuracy, it is effective to arrange, in a continuous annealing furnace including a heating zone, a soaking zone, and a cooling zone, a thickness meter and a rapid heating device on the upstream side of the soaking zone, and further change the heating temperature of the rapid heating device for a steel strip in accordance with the variation in LSD (i.e., the thickness × the threading speed) of the steel strip.

That is, a method for annealing a hot-rolled steel strip for an electrical steel sheet of the present invention is configured as follows.

[1] A method for annealing a hot-rolled steel strip containing 1.6 to 5.0 mass% Si for an electrical steel sheet using annealing equipment including a heating zone, soaking zone, and cooling zone arranged in this order from an upstream side. The method includes arranging a thickness meter and a rapid heating device on an upstream side of the soaking zone and determining the heating temperature of the rapid heating device for the steel strip from a value of LSD defined by the thickness of the steel strip measured by the thickness meter and the threading speed of the steel strip during annealing as represented by the following Expression (1):

$$LSD = t \times LS \ ...(1),$$

where t is the thickness (mm) of the steel strip, and LS is the threading speed (m/min) of the steel strip.

[2] In [1] above, the heating temperature of the rapid heating device for the steel strip can be determined based on, in addition to the LSD, information on at least one of the width of the steel strip, the furnace temperature in the heating zone on the subsequent stage after the rapid heating device, the steel strip temperature on the exit side of the heating zone, the furnace temperature in the soaking zone, and the steel strip temperature on the exit side of the soaking zone.

[3] In [1] or [2] above, the rapid heating device can be arranged upstream of the heating zone or in a front stage or a middle stage of the heating zone.

[4] In any one of [1] to [3] above, the heating temperature of the rapid heating device for the steel strip can be determined by feeding back a furnace temperature in the heating zone on the subsequent stage after the rapid heating device.

[5] In any one of [1] to [4] above, the heating temperature of the rapid heating device for the steel strip can be determined to maintain a constant steel strip temperature on an exit side of the heating zone.

[6] In any one of [1] to [5] above, the rapid heating device can use, as heating means, one or more of induction heating, electrical heating, and infrared heating.

Advantageous Effects of Invention

The present invention can control the steel strip temperature on the exit side of the heating zone as well as the steel strip temperature on the exit side of the soaking zone to a predetermined target temperature with high accuracy, which can be achieved by heating the steel strip such that the heating temperature of a rapid heating device for the steel strip is set higher as the value of LSD defined by the thickness × the threading speed of the steel strip is greater and is set lower as the LSD is smaller. This greatly contributes to improving the magnetic properties of the resulting product sheet and reducing the occurrence of defects.

Brief Description of Drawings

FIG. 1 is a schematic view illustrating an example of hot-band annealing equipment used in an embodiment of the present invention.

FIG. 2 is a schematic view illustrating an example of hot-band annealing equipment used in another embodiment of the present invention.

Description of Embodiments

Hereinafter, the present invention will be described with reference to the drawings.

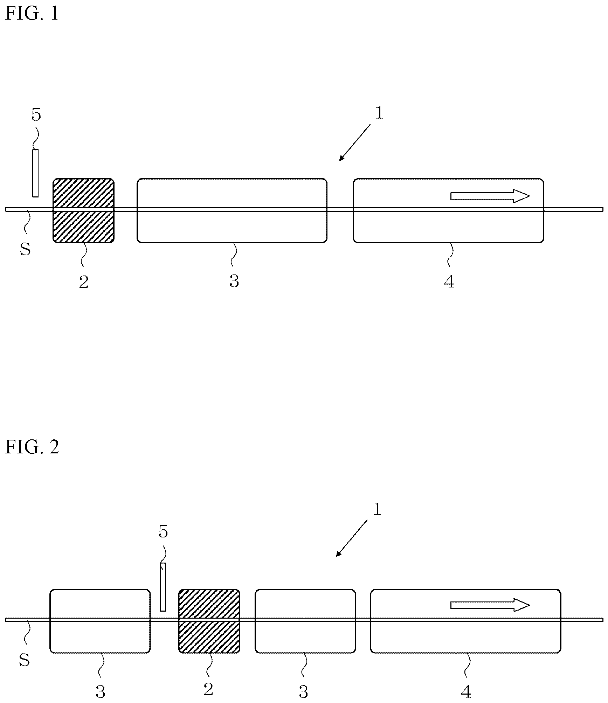

FIG. 1 is a schematic view showing the first half part of continuous annealing equipment that is used for annealing a hot-rolled steel strip for an electrical steel sheet (hot-band annealing) and includes a heating zone, a soaking zone, and a cooling zone arranged in this order from the upstream side. The hot-band annealing is typically performed by heating a steel strip S in a heating zone 3 such that the steel strip temperature on the exit side of the heating zone reaches a target soaking temperature, and then holding the steel strip S at the soaking temperature in a soaking zone 4 for a predetermined period, and further cooling the steel strip S in the cooling zone (not shown). In this treatment, the furnace temperature in each of the heating zone 3 and the soaking zone 4 and the threading speed of the steel strip S are kept in a constant condition to hold the steel strip at a predetermined soaking temperature for a predetermined period.

However, the steel strip inevitably has a variation in thickness and particularly has a large variation in thickness at the front and rear end portions of the steel strip. Further, there may be a case where the threading speed of the steel strip is suddenly changed while the steel strip is annealed. When the steel strip has a large variation in thickness or when the threading speed of the steel strip is suddenly changed, it is difficult to heat the steel strip to a target temperature only by controlling the furnace temperature in each of the heating zone and the soaking zone to be constant. Thus, the preset temperature of the furnace needs to be changed. However, suddenly changing the preset temperature of the furnace will cause an overshoot or hunting not only of the furnace temperature but also of the steel strip temperature. Further, it takes some time to change the furnace temperature, so that the furnace temperature cannot be changed immediately. Therefore, it is desirable to set the temperature of an annealing furnace 1 as constant as possible or to change the temperature gradually.

Further, a hot-rolled steel strip is thicker and has a larger heat capacity compared to a cold-rolled steel strip as described above, which makes it difficult to follow the change in the furnace temperature in the heating zone. Moreover, heating the steel strip to a target temperature is difficult as it can affect the furnace temperature in the heating zone 3. Therefore, in the heating zone 3, it is desired to heat the steel strip so that the steel strip temperature on the exit side of the heating zone can consistently maintain the predetermined target temperature, independently of the variation in the thickness or the threading speed of the steel strip.

The final purpose of the hot-band annealing is to perform heat treatment for holding the steel strip S at a target soaking temperature in the soaking zone 4 for a predetermined period. However, a hot-rolled steel strip, which is thicker than a cold-rolled steel strip, possesses a different heat amount when the steel strip temperature on the exit side of the heating zone is different, causing the amount of heat transferred to the soaking zone 4 to vary. This will cause the furnace temperature to vary, making it difficult to heat the hot-rolled steel strip to the target soaking temperature. In this sense, it is still preferable to set the steel strip temperature on the exit side of the rapid heating device 2 so that the steel strip temperature on the exit side of the heating zone 3 can maintain a constant value.

Thus, in the present invention, when a hot-rolled steel strip for an electrical steel sheet is subjected to hot-band annealing using the continuous annealing equipment shown in FIG. 1, a thickness meter 5 and a rapid heating device 2 are arranged on the upstream side of the heating zone 3, and the steel strip temperature on the exit side of the heating zone is increased to a predetermined target temperature by changing the heating temperature of the rapid heating device 2 for the steel strip S in accordance with the value of LSD, which is represented by the following Expression (1) and defined by the thickness of the steel strip measured by the thickness meter 5 and the threading speed of the steel strip during the annealing. Note that LSD is an index proportional to the heat capacity of the steel strip.

$$LSD = t \times LS \ ...(1),$$

where t is the thickness (mm) of the steel strip, and LS is the threading speed (m/min) of the steel strip.

In the present invention, when the value of LSD of the hot-rolled steel strip is larger, the heating temperature of the rapid heating device 2 for the steel strip is set higher. Conversely, when the value of LSD of the hot-rolled steel strip is smaller, the heating temperature of the rapid heating device 2 is set lower. More specifically, heating is performed such that the steel strip temperature on the exit side of the rapid heating device, that is, the heating temperature of the rapid heating device 2 is set higher than the conventional heating temperature for which the LSD is not considered as the thickness of the steel strip, including a slight variation in the thickness of the steel strip, becomes larger, while the steel strip temperature on the exit side of the rapid heating device, that is, the heating temperature of the rapid heating device 2 is set lower than the conventional heating temperature for which the LSD is not considered as the thickness of the steel strip becomes smaller. Similarly, heating is performed such that when the line speed has increased, the steel strip temperature on the exit side of the rapid heating device, that is, the heating temperature of the rapid heating device 2 is set higher than the conventional heating temperature for which the LSD is not considered, while when the line speed has decreased, the steel strip temperature on the exit side of the rapid heating device 2, that is, the heating temperature of the rapid heating device 2 is set lower than the conventional heating temperature for which the LSD is not considered.

By considering the value of LSD as described above, even when there is a variation in the thickness t of the hot-rolled steel strip S or when the threading speed LS of the hot-rolled steel strip S has suddenly changed, it is possible to suppress the variation in the steel strip temperature on the exit side of the heating zone as well as the variation in the furnace temperature in the soaking zone without changing the preset value of the furnace temperature in the heating zone 3, and thus to control the temperature of the hot-rolled steel strip to a target soaking temperature with high accuracy.

Herein, the rapid heating device 2 may be any device that can increase or change the steel strip temperature with high responsiveness. In addition, as the method for heating the steel strip, any method having many track records, such as induction heating (e.g., solenoid method and transverse method), electrical heating, or near-infrared heating, can be suitably used.

The rapid heating device 2 is arranged upstream of the soaking zone in order to control the steel strip temperature on the exit side of the heating zone and thus the steel strip temperature on the exit side of the soaking furnace with high accuracy. As shown in FIG. 1, the rapid heating device 2 may be arranged upstream of the heating zone. Alternatively, as shown in FIG. 2, the rapid heating device 2 may be arranged in the heating zone 3 (including such a case where it is arranged between split sections of the heating zone 3). However, when an induction heating device, in particular, a solenoid-actuated device is used as the rapid heating device 2, it is difficult to heat the steel strip to a temperature higher than the Curie point. Thus, in such a case, provided that the heating zone is split into three sections including the front stage, the middle stage, and the rear stage in this order from the upstream side, the rapid heating device 2 is preferably arranged not on the rear stage, but on the front stage or the middle stage.

The heating ability of the rapid heating device 2 is preferably greater to accommodate a larger thickness or a large variation in the threading speed of the hot-rolled steel strip. As one guide, when the heating temperature for a steel strip with a thickness of about 2 mm is to be changed by about $\pm 20°C$ on the exit side of the heating zone, the rapid heating device 2 with a heating ability (the amount of temperature increase) of about 50 to 100°C can sufficiently suppress the variation, though it differs depending on the temperature range (position) in which the rapid heating device is arranged and the "temperature-specific heat" relationship of the steel strip.

As described above, changing the preset value of the heating temperature of the rapid heating device 2 for the steel strip in accordance with the value of LSD, that is, the variation of (thickness $\times$ threading speed), can sufficiently contribute to controlling the heating temperature for a steel strip with high accuracy. However, to control the steel strip temperature on the exit side of the heating zone 3 with even higher accuracy, it is also preferable to consider the width of the hot-rolled steel strip S, in addition to the value of LSD. This is because since the heat capacity of a steel strip varies in proportion to the width of the steel strip, the amount of heat required to heat the steel strip and the amount of heat removed from the furnace body also vary correspondingly, and thus, the width of the steel strip also affects the steel strip temperature on the exit side of the heating zone and the furnace temperature in each of the heating zone and the soaking zone. In particular, when using annealing equipment that includes furnace bodies with low heat capacity and heating and soaking zones where the furnace temperature is likely to change, it is desirable to consider the width of the steel strip when setting the heating temperature of the rapid heating device.

Further, to achieve more accurate control of the steel strip temperature on the exit side of the heating zone, it is preferable to consider information on the furnace temperature in the heating zone on the subsequent stage after the rapid heating device when setting the heating temperature of the rapid heating device 2. For example, when the heating ability of the rapid heating device 2 is low, using the rapid heating device may be insufficient when the heat capacity of the steel strip has changed to a great degree due to the variation in the thickness or the threading speed of the hot-rolled steel strip or due to the variation in LSD. Thus, it is considered that changing the preset value of the furnace temperature in the heating zone may be effective.

Thus, it is possible to control the steel strip temperature on the exit side of the heating zone 3 with even higher accuracy by feeding back information on the constantly changing furnace temperature on the subsequent stage after the rapid heating device 2, and reflecting it in the preset value of the heating temperature of the rapid heating device 2.

Note that when the furnace temperature information is fed back, it is possible to calculate the amount of increase in the steel strip temperature on the exit side of the heating zone, using the following Expression (2):

[Expression 2]

$$\Delta T = \frac{\sigma \varphi_{CG} L}{C_p \rho V t} \times \frac{1000}{60} \times \left[ \left( \frac{T_f + 273}{100} \right)^4 - \left( \frac{T_s + 273}{100} \right)^4 \right] \qquad \cdots (2)$$

,

where $\Delta T$ is the amount of temperature increase [°C],

$\sigma$ is the Stefan-Boltzmann constant ($4.88 \times 10^{-8}$ [kcal/m²·h·K⁴],

$\phi_{CG}$ is the overall heat absorption rate,

L is the heated length [m],

$C_p$ is the specific heat [kcal/kg°C],

$\rho$ is the density 7850 [kg/m³],

V is the line speed [m/min],

t is the thickness [mm] of the sheet,

Tf is the furnace temperature [°C], and

$T_s$ is the steel sheet temperature [°C] on the entry side.

With Expression (2) above, the amount of temperature increase $\Delta T$ can be adjusted by considering the variation in the furnace temperature $T_f$ and adjusting the steel sheet temperature $T_s$ on the entry side, that is, the heating temperature of the rapid heating device for the steel sheet, so that the steel strip temperature on the entry side of the soaking zone can be controlled. Herein, the overall heat absorption rate $\phi_{CG}$ is the index representing efficiency related to the heat flow throughout the entire furnace, and is determined by the actual records of the furnace temperature and sheet temperature.

To achieve more accurate control of the steel strip temperature on the exit side of the heating zone, it is preferable to also use information on the steel strip temperature on the exit side of the heating zone, furnace temperature in the soaking zone, and temperature of the steel strip on the exit side of the soaking zone to determine the heating temperature of the rapid heating device 2 for the steel strip, in addition to LSD, the steel strip width, and the furnace temperature in the heating zone on the subsequent stage after the rapid heating device described above.

Herein, the target hot-rolled steel strip for an electrical steel sheet of the present invention contains 1.6 to 5.0 mass% Si. Si is an element effective in increasing the resistivity of steel and thus reducing an iron loss and is preferably contained at 1.6 mass% or more. However, if the Si content is more than 5.0 mass%, the magnetic flux density will decrease, and the steel will become brittle, resulting in a significant deterioration in manufacturability such that cracks will occur during cold rolling. Preferably, the Si content is in the range of 2.0 to 3.8 mass%.

Note that the hot-rolled steel strip may also contain, in addition to Si, a known inhibitor-forming component to allow secondary recrystallization to occur, or a known additional element to improve magnetic or mechanical properties.

The hot-band annealing of the present invention described above allows for uniform heat treatment at an appropriate temperature throughout the entire length of the hot-rolled steel strip in the longitudinal direction (rolling direction). Thus, the final product sheet can be provided with excellent magnetic properties without causing poor secondary recrystallization or defective crystal orientations throughout the entire length of the coil in the longitudinal direction.

Example

A hot-rolled steel strip with a thickness of 1.4 to 2.8 mm and a width of 1200 mm was subjected to hot-band annealing with a target soaking temperature of 1050°C under the conditions described in Table 1, using the annealing furnace 1 including the rapid heating device 2, the heating zone 3, and the soaking zone 4 shown in FIG. 1. At that time, the threading speed of the hot-rolled steel strip was changed at points of 1/3 and 2/3 of the steel strip in the longitudinal direction, and then, the steel strip temperature on the exit side of the heating zone 3 and the steel strip temperature on the exit side of the soaking zone 4 were measured.

Note that a solenoid-type induction heating device was used as the rapid heating device 2, and the amount of change in the heating temperature of the rapid heating device for the steel strip was set to a value obtained multiplying the difference between the two values (LSDt - LSDs) by a proportional coefficient K, wherein LSDs represents the value of the preset thickness (preset rolling thickness) of the hot-rolled steel strip × the threading speed, and LSDt represents the value of the thickness of the steel strip actually measured by the thickness meter 5 arranged upstream of the rapid heating device × the threading speed. The value of K is not fixed but varies depending on the thickness of the steel strip, heating properties such as specific heat of the steel strip, arrangement position of the rapid heating device, temperature of the annealing furnace, heated length, and so on. The value of K used in the present example is indicted in Table 1.

Regarding some of the hot-rolled steel strips, the influence FT of the furnace temperature in the heating zone subsequent to the rapid heating device was determined from Expression (2) described above, and the determined influence FT was taken into account in setting the heating temperature on the exit side of the rapid heating device.

The furnace temperature of the annealing furnace 1 (heating zone 3 or the soaking zone 4) was adjusted between 800 to 1 100°C.

Table 1

| Test No. | Rapid heating device | Heating temperature (°C) for Steel Strip on Exit | Coefficient K | Sheet thickness (mm) | Threading speed 1 (m/min) | Threading speed 2 (m/min) | Threading speed 3 (m/min) | LSD1 (mm/m/min) | LSD2 (mm/m/min) | LSD3 (mm/m/min) | Exit Side of Heating Zone | | Exit Side of Soaking Zone | | Remarks |
|---|---|---|---|---|---|---|---|---|---|---|---|---|---|---|---|
| | | | | | | | | | | | Target temperature (°C) | Maximum difference (°C) | Target temperature (°C) | Maximum difference (°C) | |
| 1 | Used | K*(LSDt-LSDs)+250 | 7 | 1.4 | 50 | 50 | 50 | 70 | 70 | 70 | 1043 | 15 | 1050 | 8 | Invention Example |
| 2 | Used | K*(LSDt-LSDs)+250 | 8 | 1.6 | 50 | 50 | 50 | 80 | 80 | 80 | 1042 | 15 | 1050 | 7 | Invention Example |
| 3 | Used | K*(LSDt-LSDs)+250 | 10 | 2.0 | 50 | 50 | 50 | 100 | 100 | 100 | 1040 | 16 | 1050 | 10 | Invention Example |
| 4 | Used | K*(LSDt-LSDs)+250 | 13 | 2.6 | 40 | 40 | 40 | 104 | 104 | 104 | 1040 | 12 | 1050 | 7 | Invention Example |
| 5 | Used | K*(LSDt-LSDs)+250 | 14 | 2.8 | 40 | 40 | 40 | 112 | 112 | 112 | 1039 | 18 | 1050 | 9 | Invention Example |
| 6 | Used | K*(LSDt-LSDs)+250 | 5 | 2.0 | 50 | 50 | 50 | 100 | 100 | 100 | 1040 | 18 | 1050 | 13 | Invention Example |
| 7 | Used | K*(LSDt-LSDs)+100 | 10 | 2.0 | 50 | 50 | 50 | 100 | 100 | 100 | 1040 | 12 | 1050 | 8 | Invention Example |
| 8 | Used | K*(LSDt-LSDs)+100 | 5 | 2.0 | 50 | 50 | 50 | 100 | 100 | 100 | 1040 | 16 | 1050 | 12 | Invention Example |
| 9 | Used | K*(LSDt-LSDs)+250 | 7 | 1.4 | 50 | 55 | 50 | 70 | 77 | 70 | 1043 | 15 | 1050 | 10 | Invention Example |
| 10 | Used | K*(LSDt-LSDs)+250 | 8 | 1.6 | 50 | 55 | 50 | 80 | 88 | 80 | 1042 | 15 | 1050 | 9 | Invention Example |
| 11 | Used | K*(LSDt-LSDs)+250 | 10 | 2.0 | 50 | 55 | 50 | 100 | 110 | 100 | 1040 | 10 | 1050 | 6 | Invention Example |
| 12 | Used | K*(LSDt-LSDs)+250 | 13 | 2.6 | 40 | 44 | 40 | 104 | 114.4 | 104 | 1040 | 11 | 1050 | 8 | Invention Example |
| 13 | Used | K*(LSDt-LSDs)+250 | 14 | 2.8 | 40 | 44 | 40 | 112 | 123.2 | 112 | 1039 | 10 | 1050 | 6 | Invention Example |

| Test No. | Rapid heating device | Heating temperature (°C) for Steel Strip on Exit | Coefficient K | Sheet thickness (mm) | Threading speed 1 (m/min) | Threading speed 2 (m/min) | Threading speed 3 (m/min) | LSD1 (mm/m/min) | LSD2 (mm/m/min) | LSD3 (mm/m/min) | Exit Side of Heating Zone | | Exit Side of Soaking Zone | | Remarks |
|---|---|---|---|---|---|---|---|---|---|---|---|---|---|---|---|
| | | | | | | | | | | | Target temperature (°C) | Maximum difference (°C) | Target temperature (°C) | Maximum difference (°C) | |
| 14 | Used | K*(LSDt-LSDs)+250 | 5 | 2.0 | 50 | 55 | 50 | 100 | 110 | 100 | 1040 | 16 | 1050 | 11 | Invention Example |
| 15 | Used | K*(LSDt-LSDs)+100 | 10 | 2.0 | 50 | 55 | 50 | 100 | 110 | 100 | 1040 | 10 | 1050 | 7 | Invention Example |
| 16 | Used | K*(LSDt-LSDs)+100 | 5 | 2.0 | 50 | 55 | 50 | 100 | 110 | 100 | 1040 | 12 | 1050 | 10 | Invention Example |
| 17 | Used | K*(LSDt-LSDs)+250+FT | 10 | 2.0 | 50 | 55 | 50 | 100 | 110 | 100 | 1040 | 5 | 1050 | 4 | Invention Example |
| 18 | Not used | 20 | - | 1.4 | 50 | 50 | 50 | 70 | 70 | 70 | 1043 | 40 | 1050 | 28 | Comparative Example |
| 19 | Not used | 20 | - | 1.6 | 50 | 50 | 50 | 80 | 80 | 80 | 1042 | 41 | 1050 | 30 | Comparative Example |
| 20 | Not used | 20 | - | 2.0 | 50 | 50 | 50 | 100 | 100 | 100 | 1040 | 43 | 1050 | 33 | Comparative Example |
| 21 | Not used | 20 | - | 2.6 | 40 | 40 | 40 | 104 | 104 | 104 | 1040 | 50 | 1050 | 35 | Comparative Example |
| 22 | Not used | 20 | - | 2.8 | 40 | 40 | 40 | 112 | 112 | 112 | 1039 | 39 | 1050 | 29 | Comparative Example |
| 23 | Used | 100 | - | 2.0 | 50 | 50 | 50 | 100 | 100 | 100 | 1040 | 35 | 1050 | 28 | Comparative Example |
| 24 | Used | 200 | - | 2.0 | 50 | 50 | 50 | 100 | 100 | 100 | 1040 | 38 | 1050 | 29 | Comparative Example |
| 25 | Used | 300 | - | 2.0 | 50 | 50 | 50 | 100 | 100 | 100 | 1040 | 34 | 1050 | 22 | Comparative Example |

EP 4 394 056 A1

| Test No. | Rapid heating device | Heating temperature (°C) for Steel Strip on Exit | Coefficient K | Sheet thickness (mm) | Threading speed 1 (m/min) | Threading speed 2 (m/min) | Threading speed 3 (m/min) | LSD1 (mm/m/min) | LSD2 (mm/m/min) | LSD3 (mm/m/min) | Exit Side of Heating Zone | | Exit Side of Soaking Zone | | Remarks |
|---|---|---|---|---|---|---|---|---|---|---|---|---|---|---|---|
| | | | | | | | | | | | Target temperature (°C) | Maximum difference (°C) | Target temperature (°C) | Maximum difference (°C) | |
| 26 | Used | 400 | - | 2.0 | 50 | 50 | 50 | 100 | 100 | 100 | 1040 | 34 | 1050 | 25 | Comparative Example |
| 27 | Not used | 20 | - | 2.0 | 50 | 55 | 50 | 100 | 110 | 100 | 1040 | 53 | 1050 | 42 | Comparative Example |
| 28 | Used | 300 | - | 2.0 | 50 | 55 | 50 | 100 | 110 | 100 | 1040 | 44 | 1050 | 36 | Comparative Example |

EP 4 394 056 A1

The heating accuracy of each annealing condition described above was evaluated by splitting each hot-rolled steel strip into 20 sections in the longitudinal direction, and determining the difference between the average steel strip temperature in each split section and the target soaking temperature (1050°C), and then identifying the maximum value among them. Note that the weight of each hot-rolled steel strip (coil) used in the present example was about 20 tons, and the difference between the preset thickness (preset value of the rolling thickness) and the actually measured thickness of the hot-rolled steel strip was 200 μm at maximum in the front and rear end portions of the hot-rolled steel strip, and was about 50 μm at maximum in the middle portion thereof.

Table 1 also shows the results. Note that in Table 1, the line speed and the LSD at the position of the first 1/3 of each hot-rolled steel strip in the longitudinal direction are respectively indicated by Line Speed 1 and LSD1, those at the position of the second 1/3 of each hot-rolled steel strip in the longitudinal direction are respectively indicated by Line Speed 2 and LSD2, and those at the position of the third 1/3 of each hot-rolled steel strip in the longitudinal direction are respectively indicated by Line Speed 3 and LSD3.

Table 1 shows that Comparative Examples (Test Nos. 18 to 22 and 27) of the conventional technology, in which no rapid heating device was used, exhibited significant variations in the temperatures of the steel strip on the exit side of the heating zone and the exit side of the soaking zone. This is largely due to the influence of the variation in the thickness and threading speed of the steel strip. Meanwhile, even in the cases where a rapid heating device was used (Test Nos. 23 to 26 and 28), the steel strip temperature on the exit side of the heating zone and the exit side of the soaking zone significantly varied under the conditions where the heating temperature of the rapid heating device was set constant without considering the influence of LSDt.

In contrast, in Invention Examples (Test Nos. 1 to 16) in which the heating temperature for the steel strip on the exit side of the rapid heating device was changed in accordance with the variation in LSDt determined from the actually measured thickness of the steel strip, it is observed that the variation in the steel strip temperature on the exit side of the heating zone and the exit side of the soaking zone could be reduced even in the presence of the thickness variation or threading speed variation of the steel strip.

In particular, in Invention Example (Test No. 17), in which the heating temperature for the steel strip on the exit side of the rapid heating device was set by considering the influence FT of the furnace temperature in the rear stage of the heating zone, it is observed that the difference between the steel strip temperature on the exit side of the heating zone and the exit side of the soaking zone and the target heating temperature can be further reduced.

FT can be derived as follows.

(The target annealing temperature for the sheet) - (the sum of the respective sections of the annealing furnace: $\Delta T1 + \Delta T2 + \Delta T3 ... \Delta Tn$) - ($K*(LSD_t - LSD_s) + 250$) = FT

The above expression changes with time and allows the steel strip to almost reach the target sheet temperature by finely adjusting FT (the temperature on the exit side of the rapid heating device).

Although the above example was conducted under particular conditions of the thickness, width, and threading speed of the steel strip and the annealing temperature, the present invention is also applicable under different conditions.

Industrial Applicability

The technology of the present invention is directed to minimize the variation in the quality of product sheets by suppressing the variation in the steel strip temperature on the exit side of the heating zone, and thus controlling the annealing temperature (soaking temperature) for the steel strip to a predetermined temperature with high accuracy. The technology of the present invention is applicable to not only a hot-rolled steel strip for an electrical steel sheet but also other metal strips for which the annealing temperature needs to be controlled.

Reference Signs List

S: Steel strip
1: Annealing furnace
2: Rapid heating device
3: Heating zone
4: Soaking zone
5: Thickness meter

**Claims**

1. A method for annealing a hot-rolled steel strip containing 1.6 to 5.0 mass% Si for an electrical steel sheet using annealing equipment including a heating zone, a soaking zone, and a cooling zone arranged in this order from an upstream side, **characterized in that**

   the method comprises
   arranging a thickness meter and a rapid heating device on an upstream side of the soaking zone and
   determining a heating temperature of the rapid heating device for the steel strip from a value of LSD defined by a thickness of the steel strip measured with the thickness meter and a threading speed of the steel strip during annealing as represented by the following Expression (1):

$$LSD = t \times LS \ ...(1),$$

   where t is the thickness (mm) of the steel strip, and LS is the threading speed (m/min) of the steel strip.

2. The method for annealing the hot-rolled steel strip according to claim 1, wherein
   the heating temperature of the rapid heating device for the steel strip is determined based on, in addition to the LSD, information on at least one of a width of the steel strip, a furnace temperature in the heating zone on the subsequent stage after the rapid heating device, a steel strip temperature on an exit side of the heating zone, a furnace temperature in the soaking zone, and a steel strip temperature on an exit side of the soaking zone.

3. The method for annealing the hot-rolled steel strip according to claim 1 or 2, wherein
   the rapid heating device is arranged upstream of the heating zone or in a front stage or a middle stage of the heating zone.

4. The method for annealing the hot-rolled steel strip according to any one of claims 1 to 3, wherein
   the heating temperature of the rapid heating device for the steel strip is determined by feeding back a furnace temperature in the heating zone on a subsequent stage after the rapid heating device.

5. The method for annealing the hot-rolled steel strip according to any one of claims 1 to 4, wherein
   the heating temperature of the rapid heating device for the steel strip is determined to maintain a constant steel strip temperature on an exit side of the heating zone.

6. The method for annealing the hot-rolled steel strip according to any one of claims 1 to 5, wherein
   the rapid heating device uses, as heating means, one or more of induction heating, electrical heating, and infrared heating.

FIG. 1

FIG. 2

## INTERNATIONAL SEARCH REPORT

| International application No. |
| --- |
| **PCT/JP2022/038751** |

### A. CLASSIFICATION OF SUBJECT MATTER

***C21D 8/12***(2006.01)i; ***C21D 9/46***(2006.01)i; ***C21D 9/56***(2006.01)i; ***C21D 11/00***(2006.01)i; ***C22C 38/00***(2006.01)i
FI: C21D9/56 101C; C21D9/46 501A; C21D8/12 B; C21D11/00 102; C22C38/00 303U

According to International Patent Classification (IPC) or to both national classification and IPC

### B. FIELDS SEARCHED

Minimum documentation searched (classification system followed by classification symbols)
C21D8/12; C21D9/46; C21D9/56; C21D11/00; C22C38/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-66040 A (JFE STEEL CORP.) 26 April 2018 (2018-04-26) <br> claims 1-8, paragraph [0033], examples | 1–6 |
| Y | JP 2011-179035 A (JFE STEEL CORP.) 15 September 2011 (2011-09-15) <br> paragraphs [0016], [0024]-[0032] | 1–6 |
| A | CN 101684514 A (ANGANG STEEL CO., LTD.) 31 March 2010 (2010-03-31) <br> p. 4, lines 1-11, examples | 1–6 |
| A | CN 201265027 Y (ANGANG STEEL CO., LTD.) 01 July 2009 (2009-07-01) <br> examples | 1–6 |
| A | JP 61-201735 A (KAWASAKI STEEL CORP.) 06 September 1986 (1986-09-06) <br> claims | 1–6 |
| A | JP 2004-197144 A (JFE STEEL CORP.) 15 July 2004 (2004-07-15) <br> entire text | 1–6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 December 2022** | **17 January 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/038751**

| Patent document cited in search report | | | Publication date (day/month/year) | Patent family member(s) | | | Publication date (day/month/year) |
|---|---|---|---|---|---|---|---|
| JP | 2018-66040 | A | 26 April 2018 | EP 3530762 A1 claims 1-8, paragraph [0039], examples CN 109844143 A KR 10-2019-0044660 A US 2019/0249270 A1 WO 2018/074295 A1 | | | |
| JP | 2011-179035 | A | 15 September 2011 | (Family: none) | | | |
| CN | 101684514 | A | 31 March 2010 | (Family: none) | | | |
| CN | 201265027 | Y | 01 July 2009 | (Family: none) | | | |
| JP | 61-201735 | A | 06 September 1986 | EP 0181830 A2 claims AU 4948285 A CA 1246338 A KR 10-1986-0004154 A US 4836774 A | | | |
| JP | 2004-197144 | A | 15 July 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016000856 A
- JP 2018066040 A